# EUROPEAN PATENT SPECIFICATION

(11) **EP 1 408 751 B1**
(45) Date of publication and mention of the grant of the patent: **01.09.2010**
(21) Application number: 02715127.3
(22) Date of filing: 25.02.2002
(51) Int. Cl.: A01N 27/00, A01N 29/02, A01N 31/04, A01N 33/04

(54) **A METHOD TO INHIBIT ETHYLENE RESPONSES IN PLANTS**
VERFAHREN ZUR HEMMUNG DER ETHYLENREAKTIONEN VON PFLANZEN
PROCEDES INHIBANT LES REPONSES A L'ETHYLENE PAR DES PLANTES

(30) Priority: 26.02.2001 US 271530 P
(43) Date of publication of application: 21.04.2004
(73) Proprietor: ROHM AND HAAS COMPANY, Philadelphia, Pennsylvania 19106-2399 (US); NORTH CAROLINA STATE UNIVERSITY, Raleigh, NC 27695-7003 (US)
(72) Inventor: JACOBSON, Richard, Martin, Chalfont, PA 18914 (US); KELLY, Martha, Jean, Norristown, PA 19403 (US); WEHMEYER, Fiona, Linette, Roslyn, PA 19001 (US); SISLER, Edward, C., Raleigh, NC 27603 (US); MULVIHILL, Mark, J., Yorktown Heights, NY 10598 (US); CARPENTER, Clark, Russell, Ambler, PA 19002-1823 (US)
(74) Representative: Kent, Venetia Katherine
(86) International application number: PCT/US2002/008003
(87) International publication number: WO 2002/067678

(56) References cited:
- WO-A-01/37663
- US-A- 5 518 988
- US-A- 6 017 849

## Description

The present invention generally relates to methods of inhibiting ethylene responses in plants and plant materials, and particularly relates to methods of inhibiting various ethylene responses including plant maturation and degradation, by exposing plants to cyclopropene derivatives and compositions thereof.

It is well known that ethylene can cause the premature death of plants or plant parts including, for example, flowers, leaves, fruits, and vegetables. Ethylene also promotes leaf yellowing and stunted growth as well as premature fruit, flower, and leaf drop. Such activities are understood to be achieved through interaction with a specific ethylene receptor in the plant. Many compounds other than ethylene interact with this receptor: some mimic the action of ethylene; others prevent ethylene from binding and thereby counteract its action. To address these ethylene-induced effects, very active and intense research presently concerns the investigation of ways to prevent or reduce the deleterious effects of ethylene on plants.

Methods of combating the ethylene response in plants with diazocyclopentadiene and derivatives thereof are disclosed in U.S. Patent No. 5,100,462 to Sisler et al. U.S. Patent No. 5,518,988 to Sisler et al. discloses the use of cyclopropene and its derivatives, including 1-methylcyclopropene, as effective blocking agents for ethylene binding. However, a major problem with these compounds is that they are typically unstable gases which present explosive hazards when compressed.

Notwithstanding these efforts, there still remains a need in the art for compounds and compositions which will control plant maturation and degradation. Preferably, the new compounds will avoid the explosive hazards of 1-methylcyclopropene and, in addition, provide alternative means of delivery, such as through liquid or solid formulations.

We have discovered a group of cyclopropene derivatives which provide many of the advantages noted above. These compounds, and their compositions, provide a method of inhibiting an ethylene response in a plant, comprising contacting the plant with an effective ethylene response-inhibiting amount of a compound of the formula: 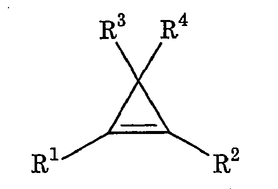 wherein:
a) from 1 to 4 of R¹, R², R³, and R⁴ are each independently selected from the group consisting of: monohalomethyl, dihalomethyl, trihalomethyl, monohaloethyl, dihaloethyl, monohalopropyl, monohaloisopropyl, 1-hydroxymethyl, 1-hydroxyethyl, 2-hydroxyethyl, 1-hydroxypropyl, 2-hydroxypropyl, 3-hydroxypropyl, 1-hydroxy-1-methylethyl, 2-hydroxy-1-methylethyl, 1-amino-2-hydroxyethyl, 1-halo-2-hydroxyethyl, 2-amino-1-hydroxyethyl, 2-halo-1-hydroxyethyl, 1,2-dihydroxyethyl, 1-methoxymethyl, 1-ethoxymethyl, 1-methoxyethyl, 2-methoxyethyl, 1-aminomethyl, 1-aminoethyl, 2-aminoethyl, 1-amino-propyl, 2-aminopropyl, 3-aminopropyl, 1-amino-1-methylethyl, 2-amino-1-methylethyl, 1,2-diaminoethyl, 1-methylaminomethyl, 1-ethylaminomethyl, 1-methylaminoethyl, 2-methylaminoethyl, dimethylaminomethyl, -CH=NOH, -CMe=NOH, -CH₂CH=NOH, -CH=NOMe, -NHNH₂, -NMeNH₂, -NHNHMe, -NEtNH₂, -NHNHEt, -NHNMe₂, -NMeNHMe, -CH₂NHNH₂, -CH₂CH₂NHNH₂, -CH₂NMeNH₂, -CH₂NHNHMe, -CONH₂, -CH₂CONH₂, -NHCOR, -NHCOMe, -NMeCOH, -CONHMe, -CO₂Me, OCO₂R, -OCOH, -OCOMe, 1-cyanomethyl, 1-cyanoethyl, 2-cyanoethyl, -CH₂CO₂H; unsubstituted or substituted nitro(C₁-C₁₂)-alkyl, unsubstituted or substituted nitro(C₁-C₁₂)alkenyl, unsubstituted or substituted nitro(C₁-C₁₂)alkynyl, unsubstituted or substituted azido(C₁-C₁₂)a1ky1, unsubstituted or substituted azido(C₁-C₁₂)-alkenyl, and unsubstituted or substituted azido(C₁-C₁₂)alkynyl wherein the substituents are from 1 to 5 and selected from halo, cyano, nitroso, chlorate, bromate, iodate, isocyanato, isocyanido, isothiocyanato, pentafluorothio; and
b) from 0 to 3 of R¹, R², R³, and R⁴ are each independently selected from the group consisting of hydrogen; (C₁-C₄)alkyl, (C₁-C₄)alkenyl, (C₁-C₄)alkynyl, halo, (C₁-C₃)alkoxy, -OCH2CH=CH2, -OCH2C≡CH, -NH₂, -NHMe, -NHEt, -NH(*n*-Pr), -NH(*i*-Pr), -NMe₂, -NMeEt, -CO₂H, or -NO₂; and
its enantiomers, stereoisomers, salts, and mixtures thereof;
or a composition thereof.

Preferably, two of R¹, R², R³, and R⁴ are hydrogen. More preferably, R¹ and R² are hydrogen or R³ and R⁴ are hydrogen. Even more preferably, R², R³, and R⁴ are hydrogen or R¹, R², and R⁴ are hydrogen. Most preferably, R², R³, and R⁴ are hydrogen.

Preferably, R¹ is monohalomethyl, dihalomethyl, trihalomethyl, monohaloethyl, dihaloethyl, monohalopropyl, monohaloisopropyl, 1-hydroxymethyl, 1-hydroxyethyl, 2-hydroxyethyl, 1-hydroxypropyl, 2-hydroxypropyl, 3-hydroxypropyl, 1-hydroxy-1-methylethyl, 2-hydroxy-1-methylethyl, 1-amino-2-hydroxyethyl, 1-halo-2-hydroxyethyl, 2-amino-1-hydroxyethyl, 2-halo-1-hydroxyethyl, 1,2-dihydroxyethyl, 1-methoxymethyl, 1-ethoxymethyl, 1-methoxyethyl, 2-methoxyethyl, 1-aminomethyl, 1-aminoethyl, 2-aminoethyl, 1-amino-propyl, 2-aminopropyl, 3-aminopropyl, 1-amino-1-methylethyl, 2-amino-1-methylethyl, 1,2-diaminoethyl, 1-methylaminomethyl, 1-ethyl-aminomethyl, 1-methylaminoethyl, 2-methylaminoethyl, or dimethylaminomethyl; and R², R³, and R⁴ are hydrogen.

Another aspect of the present invention is a method of blocking ethylene receptors in plants by applying to the plants an effective ethylene receptor-blocking amount of the cyclopropene derivative or a composition thereof.

Also disclosed are methods of inhibiting abscission in a plant, prolonging the life of a cut flower, and inhibiting the ripening of a picked fruit or vegetable, comprising applying to the plant an effective amount of the cyclopropene derivative or a composition thereof.

The methods described herein may be carried out in a variety of ways, such as by contacting the plant with a cyclopropene derivative or a composition thereof, whether in solid, liquid, or gaseous form, or by exposing the plant, cut flower, picked fruit or picked vegetable in an atmosphere infused with the cyclopropene derivative or a composition thereof. These and other suitable methods of application are discussed in detail below. For the purposes of this invention, "contacting" means to bring the cyclopropene and a plant into intimate association with each other such that a sufficient number of ethylene receptors are effected by the cyclopropene.

Agricultural compositions comprising the compounds of this invention are also encompassed by the invention. Preferably the compositions comprise 0.005% to 99%, by weight; preferably 1% to 95%, by weight; more preferably 2% to 90%, by weight; even more preferably 3% to 80%, by weight; or most preferably 4% to 70%, by weight, of the active compounds of the present invention. These compositions may comprise one or more adjuvants, such as, for example, carriers, extenders, binders, lubricants, surfactants and/or dispersants, wetting agents, spreading agents, dispersing agents, stickers, adhesives, defoamers, thickeners, and emulsifying agents. Such adjuvants commonly used in the art can be found in the John W. McCutcheon, Inc. publication Detergents and Emulsifiers, Annual, Allured Publishing Company, Ridgewood, New Jersey, U.S.A.

As used herein, all percentages are percent by weight and all parts are parts by weight, unless otherwise specified, and are inclusive and combinable. All ratios are by weight and all ratio ranges are inclusive and combinable. All molar ranges are inclusive and combinable.

Numerous organic solvents may be used as carriers for the active compounds of the present invention such as, for example, hydrocarbons such as hexane, benzene, toluene, xylene, kerosene, diesel oil, fuel oil and petroleum naphtha, ketones such as acetone, methyl ethyl ketone and cyclohexanone, chlorinated hydrocarbons such as methylene chloride, esters such as ethyl acetate, amyl acetate and butyl acetate, ethers, e.g., ethylene glycol monomethyl ether and diethylene glycol monomethyl ether, alcohols, e.g., ethanol, methanol, isopropanol, amyl alcohol, ethylene glycol, propylene glycol, butyl carbitol acetate and glycerine.

Mixtures of water and organic solvents, either as solutions or emulsions, can also be employed as inert carriers for the active compounds.

Solid, liquid, and gaseous formulations can be prepared by various conventional procedures. Thus, the active ingredient, in finely divided form if a solid, may be tumbled together with finely divided solid carrier. Alternatively, the active ingredient in liquid form, including mixtures, solutions, dispersions, emulsions and suspensions thereof, may be admixed with a solid carrier in finely divided form. Furthermore, the active ingredient in solid form may be admixed with a liquid carrier to form a mixture, solution, dispersion, emulsion, suspension or the like.

The active compounds of the present invention can be applied to plants by various suitable means. For example, an active compound may be applied alone in gaseous, liquid, or solid form by contacting the compound with the plant to be treated. Additionally the active compound may be converted to the salt form, and then applied to the plants. Alternatively, compositions containing one or more active compounds of the present invention may be formed. The compositions may be applied in gaseous, liquid, or solid form by contacting the composition with the plant to be treated. Such compositions may include an inert carrier. Similarly, when in gaseous form, the compound may be dispersed in an inert gaseous carrier to provide a gaseous solution. The active compound may also be suspended in a liquid solution such as an organic solvent or an aqueous solution that may serve as the inert carrier. Solutions containing the active compound may be heterogeneous or homogeneous and may be of various forms including mixtures, dispersions, emulsions, suspensions and the like.

The cyclopropenes may also be encapsulated into a molecular encapsulation agent. Preferred encapsulating agents include cyclodextrins, crown ethers, polysiloxanes, and zeolites. More preferred encapsulating agents include α-cyclodextrin, β-cyclodextrin, and γ-cyclodextrin. The most preferred encapsulating agent will vary depending upon the size of the R substituents. However, as one skilled in the art will appreciate, any cyclodextrin or mixture of cyclodextrins, cyclodextrin polymers as well as modified cyclodextrins can also be utilized pursuant to the present invention. Cyclodextrins are available from Wacker Biochem Inc., Adrian, MI or Cerestar USA, Hammond, IN, as well as other vendors. When encapsulated, the preferred concentrations of the cyclopropenes will typically be less than in other compositions due to the capacity limitations of molecular encapsulation agents.

The active compounds and compositions thereof can also be applied as aerosols, e.g., by dispersing them in air using a compressed gas such as, for example, nitrogen, carbon dioxide, dichlorodifluoromethane, trichlorofluoromethane, or other halocarbons.

The amount of the cyclopropene needed to inhibit ethylene effects will vary depending upon the particular cyclopropene, the type and amount of plant material present, the cyclopropene composition used, and the volume to be treated. Generally, a gas treatment (measured volume/volume) concentration of the cyclopropene in the treated chamber of from about 0.1 part per billion ("ppb") to 1000 parts per million ("ppm") provides adequate ethylene inhibition. Likewise, an applied spray treatment (measured weight/weight) concentration of the cyclopropene of from about 0.01 part per billion ("ppb") to 1000 parts per million ("ppm") provides adequate ethylene inhibition.

The term "plant" is used in a generic sense herein, and includes, for example, woody-stemmed plants such as trees and shrubs; herbs; vegetables, fruits, and agricultural crop;, and ornamental plants. Plants to be treated by the methods described herein include whole plants and any portions thereof, such as field crops, potted plants, seeds, cut flowers (stems and flowers), and harvested fruits and vegetables.

Plants treated with the compounds and by the methods of the present invention are preferably treated with a non-phytotoxic amount of the active compound.

The present invention can be employed to modify a variety of different ethylene responses such as, for example, the ripening and/or senescence of flowers, fruits, and vegetables; abscission of foliage, flowers, and fruit; the shortening of life of ornamentals such as potted plants, cut flowers, shrubbery, seeds, and dormant seedlings; in some plants (e.g., pea) the inhibition of growth, the stimulation of growth (e.g., rice), auxin activity, inhibition of terminal growth, control of apical dominance, increase in branching, increase in tillering, changing the morphology of plants, modifying the susceptibility to plant pathogens such as fungi, changing bio-chemical compositions of plants (such as increasing leaf area relative to stem area), abortion or inhibition of flowering and seed development, lodging effects, stimulation of seed germination and breaking of dormancy, and hormone or epinasty effects.

Active compounds of the present invention have a wide variety of substituent groups attached to the cyclopropene ring. As a result, the compounds have a wide variety of physical/chemical properties which may be used advantageously in the preparation of formulations of the compounds and which may result in compounds with varying potency. Among other things, compounds of the present invention may result in a longer period of insensitivity to ethylene than compounds found in the prior art. This longer period of insensitivity may occur even when compounds of the present invention are applied at a lower concentration than previous compounds.

The compounds of this invention can be prepared by a number of methods. For general references see Closs, G. L. Advan. Alicyclic Chem. 1966, 1, 53-127 and Al Dulayymi, A. R.; Al Dulayymi, J. R; Baird, M. S.; and Koza, G. Russian Journal of Organic Chemistry 1997, 33, 798-816.

The reaction of a bromo-olefin with dibromocarbene gives a tribromocyclopropane, which can be converted to the cyclopropene with methyllithium or other organolithium compounds as shown. (see Baird, M. S.; Hussain, H. H.; Nethercott, W J. Chem. Soc. Perkin Trans. 1, 1986, 1845-1854 and Baird, M. S.; Fitton, H. L.; Clegg, W; McCamley, A. J. Chem. Soc. Perkin Trans. 1, 1993, 321-326). If one equivalent of methyllithium or other alkyllithium is used, the mono-brominated cyclopropene is obtained. With 2 or more equivalents of the alkyllithium, the lithiated cyclopropene is formed. This can be quenched with water to give the cyclopropenes shown (E=H). Alternatively, the cyclopropenyllithium can be reacted with electrophiles to give derivatived cyclopropenes. Examples of such electrophiles include alkylating agents, ketones, aldehydes, esters, amides and nitriles.

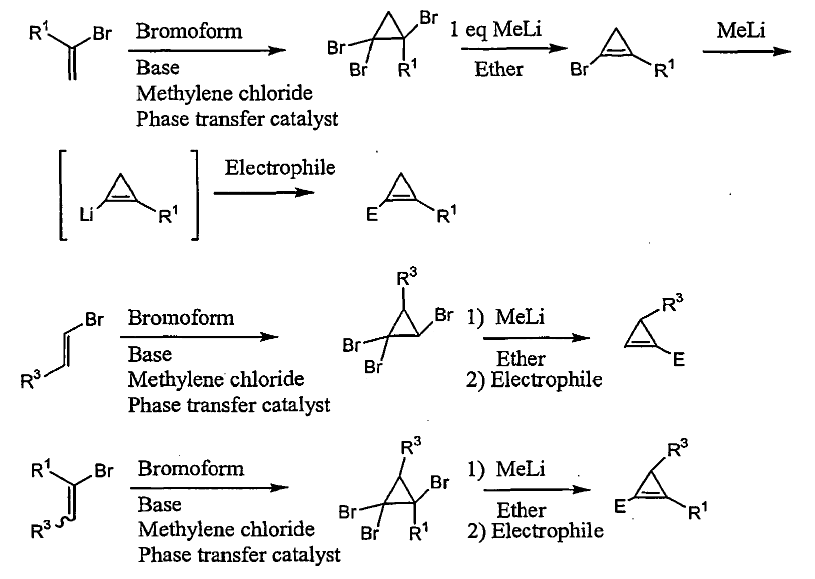

The bromo-olefins can be prepared by standard methods. Chloro-olefins can be used in place of bromo-olefins.

The tribrominated cyclopropanes can also be converted to mono-brominated cyclopropanes with reducing agents such as diethylphosphite. Other reducing agents could be used.

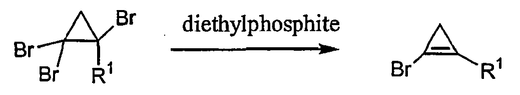

A 1,1-disubstituted olefin can also react with dibromocarbene to give a dibrominated intermediate. This can be reduced with zinc to the mono-brominated cyclopropane. Elimination of the bromide with base gives the cyclopropene (reference Binger, P. Synthesis 1974, 190).

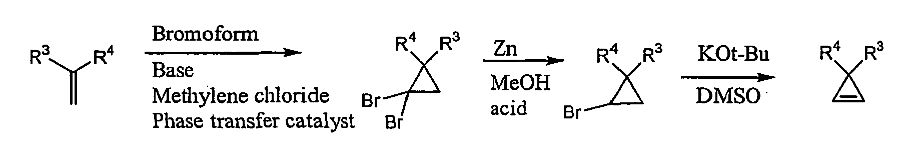

Cyclopropene can be deprotonated with a strong base such as sodium amide in liquid ammonia and reacted with an alkyl halide or other electrophiles to give a substituted cyclopropene (reference: Schipperijn, A. J.; Smael, P.; Recl. Trav. Chim. Pays-Bas, 1973, 92, 1159). Substituted cyclopropenes can be deprotonated with alkyllithium reagents and reacted with electrophiles.

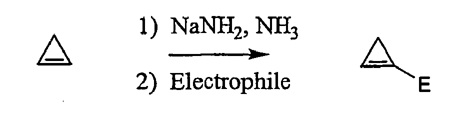

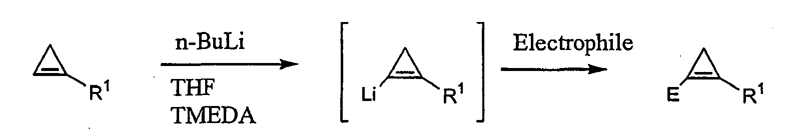

Tribromocyclopropanes or cyclopropenes containing an alcohol can be converted to a good leaving group such as a sulfonate derivative. The leaving group can be displaced with nucleophiles to give other substituted cyclopropenes.

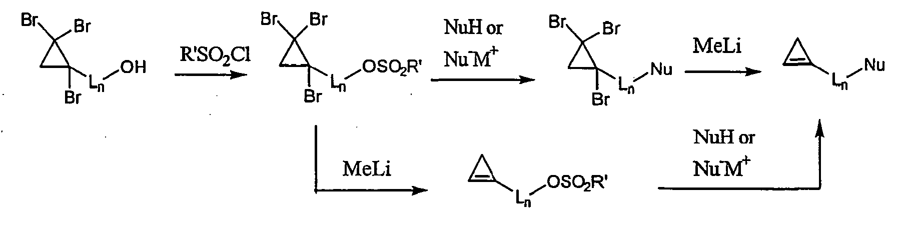

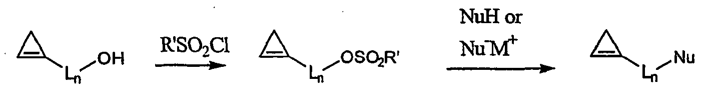

A 1-trialkylsilyl-2-hydroxycyclopropane, generated from vinyltrialkylsilane, can serve as a precursor to a cyclopropene (Mizojiri, R.; Urabe, H.; Sato, F. J. Org Chem. 2000, 65, 6217).

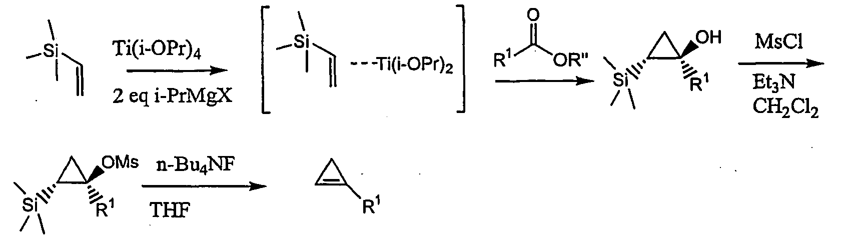

1-Trialkylsilyl-2-halocyclopropanes also undergo a fluoride catalyzed elimination to give cyclopropenes (Billups, W. E.; Lee, G-A; Arney, B. E.; Whitmire, K. H. J. Am. Chem. Soc., 1991, 113, 7980. and Banwell, M. G.; Corbett, M.; Gulbis, J.; Mackay, M.F.; Reum, M. E. J. Chem. Soc. Perkin Trans. 1, 1993, 945).

The addition of a diazo compound to an acetylene is another method that can be used for the synthesis of cyclopropenes (Mueller, P.; Cranisher, C; Helv. Chim. Acta 1993, 76, 521). 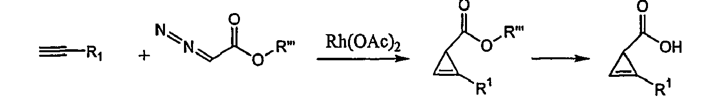 The esters can be hydrolyzed to the carboxylic acid.

Similarly, dihalocarbenes can be added to acetylenes to give 1-alkyl-3,3-dihalocyclopropenes (Bessard, Y.; Schlosser, M.; Tetrahedron, 1991, 47, 7323).

Other methods for making cyclopropenes can be found in the following references: Duerr, H., Angew. Chem. 1967, 24, 1104; Closs et al., J. Am., Chem. 1963, 85, 3796; Baird, M. S.; Dale, C. M.; Al Dulayymi, J. R. J. Chem. Soc. Perkin Trans. 1, 1993, 1373-1374; Köster, R. et al., Liebigs Annalen Chem. 1973, 1219-1235; Closs, G. L.; Closs, L. E., J. Am. Chem. Soc., 1961, 83, 1003-1004; Stoll, A. T.; Negishi, E., Tetrahedron Lett. 1985, 26, 5671-5674.

### EXAMPLES:

### EXAMPLE 1: Preparation of 1-Hydioxymethylcyclolopropene (Compound 1)

This compound can be prepared by methods described in the literature. See for example Al Dulayymi, A. R.; Al Dulayymi, J. R.; Baird, M. S.; Gerrad, M. E.; Koza, G.; Harkins, S. D.; Roberts, E. Tetrahedron, 1996, 52, 3409.

### EXAMPLE 2: Preparation of 1-(2-Hydroxyethyl)-cyclopropene (Compound 2)

### a. 2-Bromo-4-(1-ethoxy-ethoxy)-but-1-ene

While cooling a solution of 10.38 g (0.0687 mol) of commercially available 3-bromo-3-buten-l-ol in 20 ml of diethyl ether with 50 mg (0.000263 mol) p-toluene sulfonic acid monohydrate in an ice water bath, 19 ml (0.199 mol) of ethyl vinyl ether was added slowly dropwise to maintain an internal temperature of <10 °C. After 1 hour at 0 °C, a few drops of triethylamine was added. The reaction mixture was poured onto water. The resulting mixture was transferred to a separatory funnel and the phases were separated. The isolated organic layer was washed with brine then dried over potassium carbonate and filtered.. The solvent was removed from the filtrate *in vacuo* to yield 14.04 g of 2-bromo-4-(1-ethoxy-ethoxy)-but-1-ene as an oil.

### b. N,N'-dibenzyl-N,N,N',N'-tetramethylethylenediammonium dibromide and N,N'-dibenzyl-N,N,N',N'-tetraethylethylenediammonium dibromide (Phase transfer catalysts).

To a stirred solution of 16.5 g (142 mmol) of N,N,N',N'-tetramethylethylenediamine in 60 g of acetonitrile was added 50.1 g (292 mmol) of benzyl bromide. The mixture self warmed and was allowed to stir for 2.5 hours whereon a heavy precipitate was observed. The slurry was diluted with diethyl ether, filtered, washed with diethyl ether and dried yielding 61.8 g of the desired N,N'-dibenzyl-N,N,N',N'-tetramethylethylenediammonium dibromide, a white solid mp 230-232°C.

In an analogous way, using N,N,N',N'-tetraethylethylenediamine one obtains N,N'-dibenzyl-N,N,N',N'-tetraethylethylenediammonium dibromide, a white solid mp 190-193°C, decomposes.

### c. 1,1,2-Tribromo-2-[2-(1-ethoxy-ethoxy)-ethyl]-cyclopropane

To a solution of 14.02 g (0.0628 mol) 2-bromo-4-(1-ethoxy-ethoxy)-but-1-ene in 108 ml methylene chloride with 0.5-0.9 ml 45% aqueous potassium hydroxide was added 16.4 ml (0.118 mol) of bromoform and 2.88 g (0.00628 mol) of N,N'-dibenzyl-N,N,N',N'-tetramethylethylenediammonium dibromide and 28 ml (0.314 mol) 45% aqueous potassium hydroxide. After 3 days the reaction mixture was poured onto water. The resulting mixture was transferred to a separatory funnel and the phases were separated. To the isolated organic layer was added 2.88 g (0.00628 mol) of N,N'-dibenzyl-N,N,N',N'-tetramethylethylenediammonium dibromide and 28 ml (0.314 mol) 45% aqueous potassium hydroxide. After 24 hours, there was added hexanes and water. This mixture was gravity filtered through qualitative fluted filter paper. The resulting mixture was transferred to a separatory funnel and the phases were separated. The organic layer was dried over MgSO₄ and filtered. The solvent was removed from the filtrate *in vacuo* to yield 17.0 g of 1,1,2-tribromo-2-[2-(1-ethoxy-ethoxy)-ethyl]-cyclopropane as an oil.

### d. 1,1,2-Tribromo-2-(2-hydroxyethyl)-cyclopropane

To a slurry of 16.5 g (0.0418 mol) of 1,1,2-tribromo-2-[2-(1-ethoxy-ethoxy)-ethyl]-cyclopropane in 145 ml methanol and 40 ml water, was added 0.306 g (0.00161 mol) p-toluene sulfonic acid monohydrate and 145 ml 6M hydrochloric acid. After stirring at room temperature for 1 hour, the solvent was removed from the reaction mixture *in vacuo.* To the residue, there was added ethyl acetate and water. The resulting mixture was transferred to a separatory funnel and the phases were separated. The isolated organic layer was washed with brine then dried over MgSO₄ and filtered. The solvent was removed from the filtrate *in vacuo* to yield 11.9 g of 1,1,2-tribromo-2-(2-hydroxyethyl)-cyclopropane as an oil.

### d. 1-(2-Hydroxyethyl)-cyclopropene

A solution of 1.88 g (5.8 mmol) of 1,1,2-tribromo-2-(2-hydroxyethyl)-cyclopropane, in 30 ml of ether was cooled to -78 °C. Methyllithium (1.4M, 16.6 ml, 23.2 mmol) was added. The reaction mixture was warmed to 5°C after 10 minutes. The reaction was quenched with saturated ammonium chloride. More ether was added and the phases were separated. The ether phase was washed with water, washed with brine, dried over magnesium sulfate and stripped to give 140 mg of 1-(2-hydroxyethyl)-cyclopropene. NMR: (CDCl₃): 0.94 (d, 2H), 1.75 (br.s, 1H), 2.78 (td, 2H), 3.88 (t, 2H), 6.65 (t, 1H).

### EXAMPLE 3: Preparation of 1-(Hydroxymethyl)-2-ethylcyclopropene (Compound 3)

### a. 1,1,2-Tribromo-2-ethylcyclopropane

1,1,2-Tribromo-2-ethylcyclopropane was prepared from 2-bromo-1-butene by the same method used in example 2.

### b. 1-(Hydroxymethyl)-2-ethylcyclopropene

A solution of 3.0 g (10 mmol) of 1,1,2-tribromo-2-ethylcyclopropane in 50 ml of ether was cooled to -78 °C. Methyllithium (1.4M, 21.4 ml, 30 mmol) was added. The reaction mixture was warmed to 5°C. Solid paraformaldehyde (1.20 g, 40 mmol) was added, and the reaction mixture was stirred at 5°C for 1 hour, then allowed to warm to room temperature and stirred an additional hour. The reaction was quenched with water and the phases were separated. The ether phase was washed with water, washed with brine, dried over magnesium sulfate and stripped to give 900 mg of 1-(hydroxymethyl)-2-ethylcyclopropene as a yellow oil. NMR: (CDCl₃): 0.99 (s, 2H), 1.19 (t, 3H), 1.8 (br.s, 1H), 2.47 (q, 2H), 4.59 (s, 2H).

### EXAMPLE 4: Preparation of 1-(Hydroxymethyl)-2,3,3-trimethylcyclopropene (Compound 4)

1-(Hydroxymethyl)-2,3,3-trimethylcyclopropene was prepared from 2-bromo-3-methyl-2-butene by the same two step procedure used to prepare Compound 3. NMR: (CDCl₃) 1.11 (s, 6H), 2.01 (s, 3H), 2.85 (br.s, 1H), 4.53(s, 2H).

### EXAMPLE 5: Preparation of 1-(Bromomethyl)-2-ethylcyclopropene (Compound 5)

### a. 1-(Methanesulfonyloxymethyl)-2-ethylcyclopropene

To a solution of 0.70g (7.13 mmol) of 1-(hydroxymethyl)-2-ethylcyclopropene (Compound 3) and 2 ml of triethylamine in 15 ml of ether in an ice bath, was added 0.86 g (7.5 mmol) of methanesulfonyl chloride. The reaction mixture was held 1.5 hours, then quenched with water. The phases were separated. The ether phase was washed with water, washed with brine, dried over magnesium sulfate and stripped to give 840 mg of 1-(methanesulfonyloxymethyl)-2-ethylcyclopropene as a yellow oil.

### b. 1-(Bromomethyl)-2-ethylcyclopropene

Lithium bromide (1.0 g, 11.5 mmol) was added to a room temperature solution of 1.0 g (5.7 mmol) of 1-(methanesulfonyloxymethyl)-2-ethylcyclopropene. After 15 minutes, ether and water were added. The phases were separated, and the ether phase was washed with water, washed with brine, dried over magnesium sulfate and stripped to give 600 mg of 1-(bromomethyl)-2-ethylcyclopropene as a brown oil. NMR: (CDCl₃): 1.05 (s, 2H), 1.19 (t, 3H), 2.49 (q, 2H), 4.34 (s, 2H).

### EXAMPLE 6: Preparation of 1-(N,N-dimethylaminomethyl)-2-ethylcyclopropene (Compound 6)

### a. 1-(Methanesulfonyloxymethyl)-2-ethylcyclopropene

1-(Methanesulfonyloxymethyl)-2-ethylcyclopropene was prepared from 1-(hydroxymethyl)-2-ethylcyclopropene by the same method used in example 5.

### b. 1-(N,N-dimethylaminomethyl)-2-ethylcyclopropene

To a solution of 1-(methanesulfonyloxymethyl)-2-ethylcyclopropene (840 mg, 4.77 mmol) in about 8 ml of methylene chloride was added 40% aqueous dimethylamine (2.40 ml, 19.1 mmol.) After stirring about 15 minutes at room temperature, water was added and the layers were separated. The isolated organic layer was dried over magnesium sulfate and dried in vacuo to yield 327 mg (55% of theoretical) 80% pure 1-(N,N-dimethylaminomethyl)-2-ethylcyclopropene as an oil. NMR: (CDCl3): 0.9 (s, 2H), 1.2 (t, 3H), 2.3 (s, 6H), 2.45 (q, 2H), 3.4 (s, 2H)

### Biological Activity:

Compounds which block the ethylene receptors can prevent bananas from ripening. Treatment of bananas with 30 nl/l of Compound 1 protected banana peels from the effects of ethylene. The bananas were treated using the following general procedure:
An ether solution of a known amount of the active compound was placed on filter paper in a 3-liter jar. The amount of ether used was without effect when applied alone on a banana contained in a 3-liter jar. The jar was sealed and the banana was removed after 24 hours of exposure. The banana was then treated with 333 microliters per liter of ethylene in a 3-liter jar for 12-15 hours. It was then observed for ripening. The minimum concentration that protected the banana was determined.

### Tomato Epinasty Test

Objective: The test procedure is designed to determine the ability of an experimental compound to block the epinastic growth response induced by ethylene in tomato plants when the experimental compound is administered either as a volatile gas or as a component of a spray solution.

Treatment chambers are of an appropriate size for the test plants and are airtight. Each is fitted with a reusable septum to be used for injection of ethylene. Test plants are Patio variety tomato seedlings planted two plants per three inch square plastic pot.

Volatile gas treatment entails placing two pots of Patio var. tomatoes into a polystyrene 4.8L volume treatment chamber along with one-half (upper or lower section) of a 50 X 9 mm plastic Petri dish containing a Gelman filter pad. The appropriate amount of experimental compound, dissolved in 1.0 ml acetone, is pipetted onto the filter pad and the chamber immediately sealed. Four hours later ethylene gas equal to 10 ppm v/v final concentration is injected into the sealed chamber. Sixteen hours later the chambers are opened in an exhaust hood, allowed to air and the plants scored visually for the degree of protection against ethylene-induced epinasty conferred by the experimental compound when compared to ethylene treated and untreated controls on a scale of 0 to 10. A rating of 10 means complete protection. A rating of 0 means no protection from the effects of ethylene. Gas treatment concentrations are volume/volume.

Spray application treatment entails using a DeVilbiss atomizer to completely cover all foliage and stems of two pots of Patio var. tomato plants with the appropriate amount of experimental compound dissolved in 10% acetone / 90% water with 0.05% Silwett L-77 surfactant. Plants are air-dried in a drying hood for four hours then transferred to a 4.8L polystyrene chamber which is sealed.

Ethylene gas equal to 10 ppm v/v final concentration is injected into the sealed chamber. Sixteen hours later the chambers are opened in an exhaust hood, allowed to air and the plants scored visually for the degree of protection against ethylene-induced epinasty conferred by the experimental compound when compared to ethylene treated and untreated controls on a scale of 0 to 10. A rating of 10 means complete protection. A rating of 0 means no protection from the effects of ethylene. The results of these tests are as follows:

| Compound # | GAS 1000 ppm | GAS 10 ppm |
|---|---|---|
| 1 | NT | NT |
| 2 | 10 | 3 |
| 3 | 10 | 6 |
| 4 | 0 | 0 |
| 5 | 10 | 0 |
| 6 | 5 | 0 |

| | | |
|---|---|---|
| NT means not tested. | | |

## Claims

1. A method of inhibiting an ethylene response in a plant, comprising contacting the plant with an effective ethylene response-inhibiting amount of a compound of the formula: 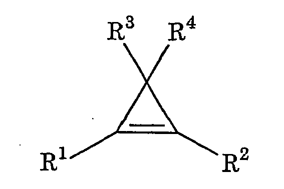 wherein:
a) from 1 to 4 of R¹, R², R³, and R⁴ are each independently selected from the group consisting of: monohalomethyl, dihalomethyl, trihalomethyl, monohaloethyl, dihaloethyl, monohalopropyl, monohaloisopropyl, 1-hydroxymethyl, 1-hydroxyethyl, 2-hydroxyethyl, 1-hydroxypropyl, 2-hydroxypropyl, 3-hydroxypropyl, 1-hydroxy-1-methylethyl, 2-hydroxy-1-methylethyl, 1-amino-2-hydroxyethyl, 1-halo-2-hydroxyethyl, 2-amino-1-hydxoxyethyl, 2-halo-1-hydroxyethyl, 1,2-di-hydroxyethyl, 1-methoxymethyl, 1-ethoxymethyl, 1-methoxyethyl, 2-methoxyethyl, 1-aminomethyl, 1-aminoethyl, 2-aminoethyl, 1-amino-propyl, 2-aminopropyl, 3-aminopropyl, 1-amino-1-methylethyl, 2-amino-1-methylethyl, 1,2-diaminoethyl, 1-methylaminomethyl, 1-ethyl-aminomethyl, 1-methylaminoethyl, 2-methylaminoethyl, dimethylaminomethyl, -CH=NOH, -CMe=NOH, -CH₂CH=NOH, -CH=NOMe, -NHNH₂, -NMeNH₂, -NHNHMe, -NEtNH₂, -NHNHEt, -NHNMe₂, -NMeNHMe, -CH₂NHNH₂, -CH₂CH₂NHNH₂, -CH₂NMeNH₂, -CH₂NHNHMe, -CONH₂, -CH₂CONH₂, -NHCOR, -NHCOMe, -NMeCOH, -CONHMe, -CO₂Me, OCO₂R, -OCOH, -OCOMe, 1-cyanomethyl, 1-cyanoethyl. 2-cyanoethyl, -CH₂CO₂H; unsubstituted or substituted nitro(C₁-C₁₂)-alkyl, unsubstituted or substituted nitro(C₁-C₁₂)alkenyl, unsubstituted or substituted nitro(C₁-C₁₂)alkynyl, unsubstituted or substituted azido(C₁-C₁₂)alkyl, unsubstituted or substituted azido(C₁-C₁₂)-alkenyl, and unsubstituted or substituted azido(C₁-C₁₂)alkynyl wherein the substituents are from 1 to 5 and selected from halo, cyano, nitroso, chlorate, bromate, iodate, isocyanato, isocyanido, isothiocyanato, pentafluorothio; and
b) from 0 to 3 of R¹, R², R³, and R⁴ are each independently selected from the group consisting of hydrogen; (C₁-C₄)alkyl, (C₁-C₄)alkenyl, (C₁-C₄)alkynyl, halo, (C₁-C₃)alkoxy, -OCH2CH=CH2, -OCH2C≡CH, -NH₂, -NHMe, -NHEt, -NH(*n*-Pr), -NH(*i*-Pr), -NMe₂, -NMeEt, -CO₂H, or -NO_{2;} and
its enantiomers, stereoisomers, salts, and mixtures thereof;
or a composition thereof.

2. The method of claim 1, wherein 2 of R¹, R², R³, and R⁴ are hydrogen.

3. The method of claim 1, wherein R¹ and R² are hydrogen or R³ and R⁴ are hydrogen.

4. The method of claim 1, wherein R², R³, and R⁴ are hydrogen.

5. The method of claim 1, wherein R¹, R², and R⁴ are hydrogen.

6. The method of claim 1, wherein the ethylene response is one or more of ripening or senescence of flowers, fruits, and vegetables; abscission of foliage, flowers, and fruit; the shortening of life of ornamental plants, cut flowers, shrubbery, seeds, or dormant seedlings; inhibition of growth; stimulation of growth; auxin activity; inhibition of terminal growth; control of apical dominance; increase in branching; increase in tillering; changing the morphology of plants, modifying the susceptibility to plant pathogens such as fungi, changing bio-chemical compositions; abortion or inhibition of flowering or seed development; lodging effects; stimulation of seed germination; breaking of dormancy; hormone effects; and epinasty effects.

7. The method of claim 1, wherein R¹ is monohalomethyl, dihalomethyl, trihalomethyl, monohaloethyl, dihaloethyl, monohalopropyl, monohaloisopropyl, 1-hydroxymethyl, 1-hydroxyethyl, 2-hydroxyethyl, 1-hydroxypropyl, 2-hydroxypropyl, 3-hydroxypropyl, 1-hydroxy-l-methylethyl, 2-hydroxy-1-methylethyl, 1-amino-2-hydroxyethyl, 1-halo-2-hydroxyethyl, 2-amino-1-hydroxyethyl, 2-halo-1-hydroxyethyl, 1,2-dihydroxyethyl, 1-methoxymethyl, 1-ethoxymethyl, 1-methoxyethyl, 2-methoxyethyl, 1-aminomethyl, 1-aminoethyl, 2-aminoethyl, 1-amino-propyl, 2-aminopropyl, 3-aminopropyl, 1-amino-1-methylethyl, 2-amino-1-methylethyl, 1,2-di-aminoethyl, 1-methylaminomethyl, 1-ethyl-aminomethyl, 1-methylaminoethyl, 2-methylaminoethyl, or dimethylaminomethyl; and R², R³, and R⁴ are hydrogen.

8. The method of claim 1, wherein R¹ is hydroxymethyl or 2-hydroxyethyl.

## Patentansprüche

1. Verfahren zum Hemmen einer Ethylenreaktion in einer Pflanze, umfassend das Inkontaktbringen der Pflanze mit einer wirksamen Ethylenreaktion-hemmenden Menge einer Verbindung der Formel: 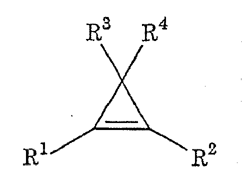 wobei:
a) von 1 bis 4 von R¹, R², R³ und R⁴ jeweils unabhängig aus der Gruppe ausgewählt sind, bestehend aus: Monohalogenmethyl, Dihalogenmethyl, Trihalogenmethyl, Monohalogenethyl, Dihalogenethyl, Monohalogenpropyl, Monohalogenisopropyl, 1-Hydroxymethyl, 1-Hydroxyethyl, 2-Hydroxyethyl, 1-Hydroxypropyl, 2-Hydroxypropyl, 3-Hydroxypropyl, 1-Hydroxy-1-methylethyl, 2-Hydroxy-1-methylethyl, 1-Amino-2-hydroxyethyl, 1-Halogen-2-hydroxyethyl, 2-Amino-1-hydroxyethyl, 2-Halogen-1-hydroxyethyl, 1,2-Dihydroxyethyl, 1-Methoxymethyl, 1-Ethoxymethyl, 1-Methoxyethyl, 2-Methoxyethyl, 1-Aminomethyl, 1-Aminoethyl, 2-Aminoethyl, 1-Aminopropyl, 2-Aminopropyl, 3-Aminopropyl, 1-Amino-1-methylethyl, 2-Amino-1-methylethyl, 1,2-Diaminoethyl, 1-Methylaminomethyl, 1-Ethylaminomethyl, 1-Methylaminoethyl, 2-Methylaminoethyl, Dimethylaminomethyl, -CH=NOH, -CMe=NOH, -CH₂CH=NOH, -CH=NOMe, -NHNH₂, -NMeNH₂, -NHNHMe, -NEtNH₂, -NHNHEt, -NHNMe₂, -NMeNHMe, -CH₂NHNH₂, -CH₂CH₂NHNH₂, -CH₂NMeNH₂, -CH₂NHNHMe, -CONH₂, -CH₂CONH₂, -NHCOR, -NHCOMe, -NMeCOH, -CONHMe, -CO₂Me, -OCO₂R, -OCOH, -OCOMe, 1-Cyanomethyl, 1-Cyanoethyl, 2-Cyanoethyl, -CH₂CO₂H, unsubstituiertem oder substituiertem C₁-C₁₂-Nitroalkyl, unsubstituiertem oder substituiertem C₁-C₁₂-Nitroalkenyl, unsubstituiertem oder substituiertem C₁-C₁₂-Nitroalkinyl, unsubstituiertem oder substituiertem C₁-C₁₂-Azidoalkyl, unsubstituiertem oder substituiertem C₁-C₁₂-Azidoalkenyl und unsubstituiertem oder substituiertem C₁-C₁₂-Azidoalkinyl, wobei die Substituenten von 1 bis 5 sind und aus Halogen, Cyano, Nitroso, Chlorat, Bromat, Iodat, Isocyanato, Isocyanido, Isothiocyanato, Pentafluorthio ausgewählt sind; und
b) von 0 bis 3 von R¹, R², R³ und R⁴ jeweils unabhängig aus der Gruppe ausgewählt sind, bestehend aus Wasserstoff, C₁-C₄-Alkyl, C₁-C₄-Alkenyl, C₁-C₄-Alkinyl, Halogen, C₁-C₃-Alkoxy, -OCH₂CH=CH₂, -OCH₂C≡CH, -NH₂, -NHMe, -NHEt, -NH(*n*-Pr), -NH(*i*-Pr), -NMe₂, -NMeEt, -CO₂H oder -NO₂;
und
ihren Enantiomeren, Stereoisomeren, Salzen, und Gemischen davon;
oder einer Zusammensetzung davon.

2. Verfahren nach Anspruch 1, wobei 2 von R¹, R², R³ und R⁴ Wasserstoff sind.

3. Verfahren nach Anspruch 1, wobei R¹ und R² Wasserstoff sind oder R³ und R⁴ Wasserstoff sind.

4. Verfahren nach Anspruch 1, wobei R², R³ und R⁴ Wasserstoff sind.

5. Verfahren nach Anspruch 1, wobei R¹, R² und R⁴ Wasserstoff sind.

6. Verfahren nach Anspruch 1, wobei die Ethylenreaktion eines oder mehrere aus dem Reifen oder Altern von Blumen, Früchten und Gemüse; Abtrennung von Blättern, Blumen und Früchten; der Verkürzung des Lebens von Zierpflanzen, Schnittblumen, Strauchwerk, Samen oder ruhenden Sämlingen; Wachstumshemmung; Wachstumsanreiz; Auxinaktivität; Hemmung des Endwachstums; Kontrolle von apikaler Dominanz; Zunahme an Verzweigung; Zunahme an Ausläuferbildung; Veränderung der Morphologie von Pflanzen, dem Modifizieren der Anfälligkeit gegenüber pflanzlichen Krankheitserregern wie Pilzen; dem Verändern biochemischer Zusammensetzungen; Verkümmerung oder Hemmung der Blüten- oder Samenentwicklung; Lodging-Effekten, Anreiz von Samenkeimung; Bruch der Knospen- und Samenruhe; Hormoneffekten; und Epinasteffekten ist.

7. Verfahren nach Anspruch 1, wobei R¹ Monohalogenmethyl, Dihalogenmethyl, Trihalogenmethyl, Monohalogenethyl, Dihalogenethyl, Monohalogenpropyl, Monohalogenisopropyl, 1-Hydroxymethyl, 1-Hydroxyethyl, 2-Hydroxyethyl, 1-Hydroxypropyl, 2-Hydroxypropyl, 3-Hydroxypropyl, 1-Hydroxy-1-methylethyl, 2-Hydroxy-1-methylethyl, 1-Amino-2-hydroxyethyl, 1-Halogen-2-hydroxyethyl, 2-Amino-1-hydroxyethyl, 2-Halogen-1-hydroxyethyl, 1,2-Dihydroxyethyl, 1-Methoxymethyl, 1-Ethoxymethyl, 1-Methoxyethyl, 2-Methoxyethyl, 1-Aminomethyl, 1-Aminoethyl, 2-Aminoethyl, 1-Aminopropyl, 2-Aminopropyl, 3-Aminopropyl, 1-Amino-1-methylethyl, 2-Amino-1-methylethyl, 1,2-Diaminoethyl, 1-Methylaminomethyl, 1-Ethylaminomethyl, 1-Methylaminoethyl, 2-Methylaminoethyl oder Dimethylaminomethyl ist; und
R², R³ und R⁴ Wasserstoff sind.

8. Verfahren nach Anspruch 1, wobei R¹ Hydroxymethyl oder 2-Hydroxyethyl ist.

## Revendications

1. Procédé d'inhibition d'une réaction à l'éthylène chez une plante, comprenant la mise en contact de la plante avec une quantité efficace, inhibant la réaction à l'éthylène, d'un composé de formule : 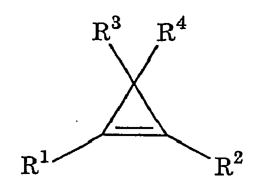 où :
(a) de 1 à 4 de R¹, R², R³ et R⁴ sont sélectionnés chacun indépendamment dans le groupe constitué de : monohalogénométhyle, dihalogénométhyle, trihalogénométhyle, monohalogénoéthyle, dihalogénoéthyle, monohalogénopropyle, monohalogénoisoproyle, 1-hydroxyméthyle, 1-hydroxyéthyle, 2-hydroxyéthyle, 1-hydroxypropyle, 2-hydroxypropyle, 3-hydroxypropyle, 1-hydroxy-1-méthyléthyle, 2-hydroxy-1-méthyléthyle, 1-amino-2-hydroxyéthyle, 1-halogéno-2-hydroxyéthyle, 2-amino-1-hydroxyéthyle, 2-halogéno-1-hydroxyéthyle, 1,2-di-hydroxyéthyle, 1-méthoxyméthyle, 1-éthoxyméthyle, 1-méthoxyéthyle, 2-méthoxyéthyle, 1-aminométhyle, 1-aminoéthyle, 2-aminoéthyle, 1-amino-propyle, 2-aminopropyle, 3-aminopropyle, 1-amino-1-méthyléthyle, 2-amino-1-méthyléthyle, 1,2-diaminoéthyle, 1-méthylaminométhyle, 1-éthylaminométhyle, 1-méthylaminoéthyle, 2-méthylaminoéthyle, diméthylaminométhyle, -CH=NOH, -CMe=NOH, -CH₂CH=NOH, -CH=NOMe, -NHNH₂, -NMeNH₂, -NHNHMe, -NEtNH₂, -NHNHEt, -NHNMe₂, -NMeNHMe, -CH₂NHNH₂, -CH₂CH₂NHNH₂, -CH₂NMeNH₂, -CH₂NHNHMe, -CONH₂, -CH₂CONH₂, -NHCOR, -NHCOMe, -NMeCOH, -CONHMe, -CO₂Me, OCO₂R, -OCOH, -OCOMe, 1-cyanométhyle, 1-cyanoéthyle, 2-cyanoéthyle, -CH₂CO₂H ; nitroalkyle en C₁-Cₗ₂ substitué ou non subsituté, nitroalcényle en C₁-C₁₂ substitué ou non substitué, nitroalcynyle en C₁-C₁₂ substitué ou non substitué, azidoalkyle en C₁-C₁₂ substitué ou non substitué, azidoalcényle en C₁-C₁₂ substitué ou non substitué et azidoalcényle en C₁-C₁₂ substitué ou non substitué, où les substituants sont de 1 à 5 et sélectionnés parmi halogéno, cyano, nitroso, chlorate, bromate, iodate, isocyanato, isocyanido, isothiocyanato, pentafluorothio ; et
b) de 0 à 3 de R¹, R², R³ et R⁴ sont sélectionnés chacun indépendamment dans le groupe constitué de l'hydrogène ; alkyle en C₁-C₄, alcényle en C₁-C₄, alcynyle en C₁-C₄, halogéno, alcoxy en C₁-C₃, -OCH₂CH=CH₂, -OCH₂C=CH, -NH₂, -NHMe, -NHEt, -NH(n-Pr), -NH(i-Pr), -NMe₂, -NMeEt, -CO₂H, ou -NO₂ ; et
ses énantiomères, stéréoisomères, sels et leurs mélanges ;
ou une composition de celui-ci.

2. Procédé selon la revendication 1, où 2 de R¹, R², R³ et R⁴ sont l'hydrogène.

3. Procédé selon la revendication 1, où R¹ et R² sont l'hydrogène ou R³ et R⁴ sont l'hydrogène.

4. Procédé selon la revendication 1, où R², R³ et R⁴ sont l'hydrogène.

5. Procédé selon la revendication 1, où R¹, R² et R⁴ sont l'hydrogène.

6. Procédé selon la revendication 1, où la réaction à l'éthylène est un ou plusieurs des éléments suivants : maturation ou sénescence de fleurs, fruits et légumes ; abscission de feuillage, de fleurs et de fruits ; raccourcissement de la durée de vie des plantes ornementales, des fleurs coupées, des bosquets, des graines ou des semis dormants ; inhibition de la croissance ; stimulation de la croissance ; activité auxinique ; inhibition de la croissance terminale ; contrôle de la dominance apicale ; augmentation de la ramification ; augmentation du tallage ; modification de la morphologie des végétaux ; modification de la sensibilité à des agents pathogènes végétaux tels que les champignons ; modification des compositions biochimiques ; rachitisme ou inhibition de la floraison ou du développement des graines ; effets de verse ; stimulation de la germination des graines ; interruption de la dormance ; effets hormonaux ; et effets d'épinastie.

7. Procédé selon la revendication 1, où R¹ est monohalogénométhyle, dihalogénométhyle, trihalogénométhyle, monohalogénoéthyle, dihalogénoéthyle, monohalogénopropyle, monohalogénoisopropyle, 1-hydroxyméthyle, 1-hydroxyéthyle, 2-hydroxyéthyle, 1-hydroxypropyle, 2-hydroxypropyle, 3-hydroxypropyle, 1-hydroxy-1-méthyléthyle, 2-hydroxy-1-méthyléthyle, 1-amino-2-hydroxyléthyle, 1-halogéno-2-hydroxyéthyle, 2-amino-1-hydroxyéthyle, 2-halogéno-1-hydroxyéthyle, 1,2-dihydroxyéthyle, 1-méthoxyméthyle, 1-éthoxyméthyle, 1-méthoxyéthyle, 2-méthoxyéthyle, 1-aminométhyle, 1-aminoéthyle, 2-aminoéthyle, 1-aminopropyle, 2-aminopropyle, 3-aminopropyle, 1-amino-1-méthyléthyle, 2-amino-1-méthyléthyle, 1,2-diaminoéthyle, 1-méthylaminométhyle, 1-éthyl-aminométhyle, 1-méthylaminoéthyle, 2-méthylaminoéthyle ou diméthylaminométhyle ; et R², R³ et R⁴ sont l'hydrogène.

8. Procédé selon la revendication 1, où R¹ est hydroxyméthyle ou 2-hydroxyéthyle.
